# EUROPEAN PATENT APPLICATION

(11) **EP 0 911 814 A2**
(43) Date of publication of application: **28.04.1999**
(21) Application number: 98307179.6
(22) Date of filing: 07.09.1998
(51) Int. Cl.: G11B 5/704, G11B 5/716

(54) **Magnetic recording medium**

(30) Priority: 11.09.1997 JP 247329/97
(71) Applicant: SONY CORPORATION, Tokyo (JP)
(72) Inventor: Kudo, Takao, Shinagawa-ku, Tokyo (JP)
(74) Representative: Ayers, Martyn Lewis Stanley

(57) **Abstract**

The present invention provides a magnetic recording medium including a magnetic layer having a preferable surface state and an excellent electro-magnetic conversion characteristic as well as an excellent conductivity.

The magnetic recording medium according to the present invention includes a lower conductive layer 2 containing electro-conductive fine particles and a binder and formed on a non-magnetic support body 1; an intermediate flat layer 3 containing a non-magnetic powder and a binder and formed on the lower conductive layer 2; and an upper magnetic layer 4 containing a ferromagnetic powder and a binder and formed on the intermediate flat layer 3.

## Description

The present invention relates to a magnetic recording medium such as a magnetic tape and a magnetic disc and in particular, to a magnetic recording medium having a recording layer formed by coating a with a magnetic paint.

As a magnetic recording medium such as a video tape, audio tape, and a magnetic disc, there can be exemplified a so-called paint-type having a magnetic layer formed by applying onto a non-magnetic support body a magnetic paint prepared using a ferromagnetic powder such as a ferromagnetic iron oxide, Co-denatured iron oxide, CrO₂, and a ferromagnetic alloy powder dispersed in a binder.

These years, in the field of the magnetic recording, the recording density is becoming higher and higher, and the wavelength is becoming shorter and shorter. The paint-type magnetic recording medium is also expected to have characteristics corresponding to this increased densitY and short wavelength.

Here, in the paint-type magnetic recording medium, as a method to improve the electro-magnetic conversion characteristic in a high recording density region, there can be exemplified a technique to make the magnetic layer thinner. If the magnetic layer has a small thickness, the self-demagnetization loss during recording and the thickness loss during reproduction are reduced, which brings about a significant improvement of the electro-magnetic conversion characteristic.

However, if the magnetic layer has a thickness equal to or smaller than 2 µm, the surface configuration of the non-magnetic support body easily affects the surface the magnetic layer, making the surface of the magnetic layer rough. This brings about a spacing loss, deteriorating the electro-magnetic conversion characteristic as well as increasing the number of drop-outs.

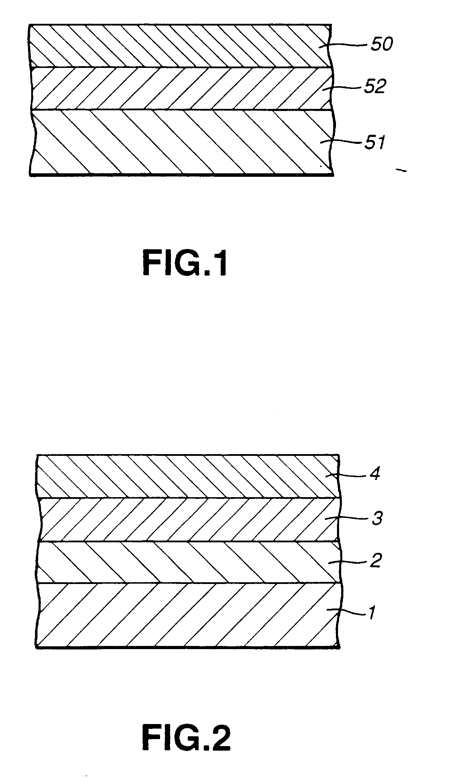

To cope with this, as the paint-type magnetic recording medium, there has been suggested a double-paint-type as shown in Fig. 1 including a lower non-magnetic layer 52 provided between a magnetic layer 50 and a non-magnetic support body 51 so that a surface configuration of the non-magnetic support body 51 will no easily appear on the surface of the magnetic layer 50. In the double-paint-type magnetic recording medium, the surface state of the magnetic layer 50 is affected by the surface configuration of the lower non-magnetic layer 52. That is, the surface flatness and smoothness of the magnetic layer 50 is greatly deteriorated depending on a preparation method of a paint for the lower non-magnetic layer. In order to obtain a flat and smooth surface of the magnetic layer 50, it is necessary to prepare a lower non-magnetic layer paint which satisfies this condition.

In this double-paint-type magnetic recording medium, the magnetic layer 50 can have a flat and smooth surface to a certain degree by preparing a lower non-magnetic layer paint having desired characteristics, thus enabling to obtain an excellent electro-magnetic conversion characteristic in a short wavelength region.

On the other hand, in a magnetic recording medium, a high electric resistance causes charging, resulting in adhesion of dust on a surface. In this case, the magnetic recording medium may cause a drop-out as well as generate a missing pulse by discharge. Accordingly, as a magnetic recording medium, it is important to suppress the electric resistance at a low level.

To cope with this, in the magnetic recording medium, graphite and carbon black are added to the magnetic layer 50 for the sake of electric conductivity. This enables to suppress the electric resistance in the magnetic recording medium, eliminating a problem of drop-out and the like.

Now, the aforementioned graphite and carbon black, in general, has a low dispersibility and when added to a paint, it may form a clod of a predetermined size. If such a graphite and carbon black are added to a magnetic paint, the mangetic layer 50 cannot have a flat and smooth surface, which greatly deteriorates the recording/reproduction characteristics.

Accordingly, it is considered to add the graphite and carbon in the lower non-magnetic layer 52 so as to reduce the electric resistance of the magnetic recording medium as a whole. However, in this case also, the low dispersion of the graphite and carbon forms a clod. As a result, the lower non-magnetic layer 52 containing he graphite and carbon has a rough surface, which greatly deteriorates the surface flatness and smoothness of the magnetic layer 50. Thus, in this case also, the magnetic recording medium has a deteriorated recording/reproduction characteristic.

Thus, in the aforementioned magnetic recording medium, it is difficult to simultaneously obtain a flat and smooth surface of the magnetic layer 50 and electric conductivity of the magnetic recording medium.

It is therefore and object of the present invention to provide a magnetic recording medium having a magnetic layer with a preferable surface and an excellent electro-magnetic conversion characteristic a well as an excellent electric conductivity.

The magnetic recording medium which has achieved the aforementioned object according to the present invention includes: a lower conductive layer containing conductive fine particles and a binder and formed on a non-magnetic support body; an intermediate flat layer containing a non-magnetic powder and a binder and formed on the lower conductive layer; and an upper magnetic layer containing a ferromagnetic powder and a binder and formed on the intermediate flat layer.

In the magnetic recording medium having the aforementioned configuration, the upper magnetic layer has a surface state affected by the intermediate flat layer. In this magnetic recording medium, the intermediate layer contains a non-magnetic powder and a binder and accordingly, has a preferable surface state. Consequently, this magnetic recording medium includes the upper magnetic layer having a highly flattened and smoothed surface state. Moreover, because this magnetic recording medium has the lower conductive layer containing conductive fine particles, it is possible to suppress the electric resistance as a whole.

The present invention will be more clearly understood from the following description, given by way of example only, with reference to the accompanying drawings in which:

Fig. 1 is a cross sectional view showing a portion of a conventional magnetic recording medium.

Fig. 2 is a cross sectional view showing a portion of a magnetic recording medium according to the present invention.

Fig. 3 schematically shows a paint coating system for forming a lower conductive layer and an upper magnetic layer by way of a wet-on-wet coating method.

Fig. 4 schematically shows a specific example of a coating apparatus in the aforementioned paint coating system.

Fig. 5 schematically shows another example of the coating apparatus.

Fig. 6 schematically shows still another example of the coating apparatus.

### DETAILED DESCRIPTION OF PREFERRED EMBODIMENTS

Hereinafter, description will be directed to a magnetic recording medium according to an embodiment of the present invention with reference to the attached drawings.

Fig. 2 shows he magnetic recording medium according to the present invention including a non-magnetic support body 1, a lower conductive layer 2 formed on the non-magnetic support body, an intermediate flat layer 3 formed on the lower conductive layer 2, and an upper magnetic layer formed on the intermediate flat layer 3. The non-magnetic support body may be made from, for example, polyethylene terephthalate, polyethylene-2, 6-naphthalate, and other polyesters; polypropylene and other polyolefin; cellulose triacetate, cellulose diacetate, and other cellulose derivatives; polyamide, alamide resin, polycarbonate, and other plastics. The non-magnetic support body 1 may have a single-layered configuration of a multi-layered configuration. Moreover, this non-magnetic support body may be subjected to a surface treatment such as corona discharge treatment or may be covered with an organic layer increasing adhesiveness.

The non-magnetic support body may have a thickness not limited to a particular value. For example, if the medium is a film-shaped or sheet-shaped, the thickness is preferably in a range from 2 to 100 µm, and more preferably, from 3 to 50 µm. Moreover, if the medium is a disc-shaped or card-shaped, the thickness is preferably in the order of 30 µm to 10 mm, and if the medium is a drum-shaped, the thickness can be selected according to a recorder design or the like.

The lower conductive layer is formed on the aforementioned non-support body 1 and contains electro-conductive fine particles and binder as main contents. This lower conductive layer 2 is formed by coating the non-magnetic support body 1 with a lower conductive layer paint prepared by dispersing conductive fine particles and binder together with a solvent.

In this lower conductive layer 2, the conductive particles may be any material which, when mixed in the layer, can suppress charge of the magnetic recording medium as a whole. For example, there can be exemplified carbon black, graphite, and the like. Here, the carbon black and graphite are not limited to particular types but may be any which is available easily and normally used in a magnetic recording medium.@

As the binder, there can be exemplified polyurethane resin, polyester resin, vinyl chloride copolymer and other vinyl chloride resin.

Each of these resins may be used solely or in combination with others. For example, when using two or more resins in combination, polyethylene and/or polyurethane are often used in combination with vinyl chloride resin. In this case, the weight ratio of the polyurethane and/or polyester and the vinyl chloride resin is preferable in a range of 90 : 10 to 10 : 90, and more preferably in a range of 70 : 30 to 30 : 70.

Moreover, as the binder, the following resins may be used together. As the resin to be used together, there can be exemplified vinyl chloride - vinyl acetate copolymer, vinyl chloride - vinylidene chloride copolymer, vinyl chloride - acrylonitrile copolymer, butadiene - acrylonitrile copolymer, polyamide resin, polyvinyl butyral, cellulose derivative (such as nitrocellulose), styrene - butadiene copolymer, phenol resin, epoxy resin, urea resin, melamine resin, phenoxy resin, silicone resin, acrylic resin, urea formamide resin, various synthetic rubber resin, and the like, having an average molecular weight of 10,000 to 200,000.

The content of the binder to be mixed is preferably 80 to 120 weight parts with respect to 100 weight parts of a conductive power such as carbon black and/or graphite.

Furthermore, as the solvent, there can be exemplified those normally used in a magnetic recording medium such as acetone, methylethyl ketone, methyl isobutyl ketone, cylcohexanon, and other ketones; methanol, ethanol, propanol, butanol, and other alcohols; methyl acetate, ethyl acetate, butyl acetate, ethyl lactate, ethylene glycol acetate, and other esters; blycol dimethyl ether, glycol monoethyl ether, dioxan, tetrahydrofuran, and other ethers; benzene, toluene, xylene, and other aromatic hydrocarbons; methylene chloride, ethylene chloride, carbon tetrachloride, chloroform, dichlorbenzene, other halogen hydrocarbons, Each of these solvents may be used solely or in combination with others.

When preparing a paint, it is possible to carry out kneading when required. For this kneading, it is possible to use any of the followings (not depicted): two-roll mill, three-roll mill, open kneader, continuous tow-shaft kneader, pressurized kneader, and the like. Because of the capability to provide a consumption power load of 0.05 to 0.5 kW (per 1 kg of powder), especially preferable are the pressurized kneader, open kneader, continuous two-shaft kneader, two-roll mill, and three-roll mill.

Furthermore, in the kneading step, it is possible to add a dispersion agent, As the dispersion agent, there can be exemplfied a silane coupling agent. This dispersion agent is preferably added in the amount of 0.5 to 5 weight % with respect to the carbon block and/or graphite fine powder.

Moreover, in order to improve a running durability of a medium, it is possible to add a lubricant which is usually used in this type of magnetic recording medium. As the lubricant, it is possible to use a fatty acid, fatty acid ester, and the like solely or in combination. The fatty acid may be a one-base acid or two-base acid and the number of carbons is preferably 6 to 30 and more preferably 12 to 22. When using the fatty acid in combination with fatty acid ester, the mixture ratio of the fatty acid and the fatty acid ester is preferably 10 : 90 to 90 : 10 in weight ratio. As the lubricant, it is possible to use known lubricants together with the aforementioned fatty acid and fatty acid ester. As the lubricant to be used together, there can be exemplified silicone oil, carbon fluoride, fatty acid amide, olefin oxide, and the like.

Furthermore, as a hardening agent, polyisocianate and the like are used. The polyisocyanate may be, for example, aromatic polyisocyanate such as an additional mass of tolylendiisocyanate (TDI) and active hydrogen compound, aliphatic polyisocyanate such as an additional mass of hexamethylene diisocyanate (HMDI) and active hydrogen compound, and the like. These polyisocyantes preferably have an average molecular weight in a range of 100 to 3,000.

On the other hand, the intermediate flat layer 3 is formed on the aforementioned lower conductive layer 2 and contains a non-magnetic powder and a binder as main contents. This intermediate flat layer 3 is formed by coating an intermediate flat layer paint preferred from these non-magnetic powder and binder dispersed together with a solvent.

Here, the non-magnetic powder may be any material if it can flatten the surface of the upper magnetic layer 4 formed on this intermediate flat layer 3. There can be exemplified α-Fe₂O₃, TiO₂, and α-FeOOH. When using the α-Fe₂O₃ for example, it is preferable to use needle-shaped α-Fe₂O₃ particles having a longer axis length equal to or below 0.2 µm. The needle-shaped α-Fe₂O₃ particles have an excellent dispersibility in comparison to other non-magnetic particles, and improves the surface flatness of the intermediate flat layer 3, which in turn makes flat the surface of the upper magnetic layer 4 formed thereon. Furthermore, if the longer axis length is equal to or below 0.2 µm, the intermediate flat layer and the upper layer can have a further flat and smooth surface. In this case, the non-magnetic powder preferably has an axis ratio (longer axis length/shorter axis length) in a range of 2 to 20, and more preferably 5 to 15, and further preferably 5 to 10. The preferable specific surface is 10 to 250 m²/g and more preferably 20 to 150 m²/g and further preferably 30 to 100 m²/g.

Moreover, in addition to the aforementioned non-magnetic powder, this intermediate flat layer 3 may contain a predetermined amount of inorganic pigment in order to improve the running durability. The inorganic pigment may be, for example, α-Al₂O₃. By adding an inorganic pigment to this intermediate flat layer 3, it is possible to form a rough protrusion on the surface of the upper magnetic layer 4 formed on the intermediate flat layer 3. This improves the running durability of the magnetic recording medium.

In this intermediate flat layer 3, it is possible to use as a binder and solvent any of the aforementioned binders and solvents exemplified for the lower conductive layer 2. The mixture ratio of these binders in the intermediate flat layer is preferably 5 to 150 weight parts and more preferably 10 to 120 with respect to 100 weight parts of non-magnetic powder.

When preparing an intermediate flat layer paint, it is possible to carry out kneading if required. For this kneading, it is possible to use any of the aforementioned kneading apparatuses exemplified in the description of the lower conductive layer. As for the dispersion agent, it is possible to use the aforementioned dispersion agents exemplified in the description of the lower conductive layer 2.

Moreover, in order to improve the running durability of the magnetic recording medium, this intermediate flat layer 3 may contain any of lubricants normally used in this type of magnetic recording medium. In this case, it is possible to use any of the lubricants exemplified in the description of the lower conductive layer 2.

On the other hand, the upper magnetic layer 4 is formed on the aforementioned intermediate flat layer 3 and contains a ferromagnetic powder and binder as main contents. This upper magnetic layer 4 is formed by coating an upper magnetic layer paint prepared by dispersing a ferromagnetic powder and binder together with a solvent.

Here, as the ferromagnetic powder, there can be exemplified γ-Fe₂O₃, Co-containing γ-Fe₂O₃, Co-adhered γ-Fe₂O₃, CrO₂, and ferrites such as magnetite, i.e., Fe₃O₄, Co-containing Fe3O4, Co-adhered Fe3O4. Moreover, as the ferromagnetic powder, it is possible to use a metal magnetic powder. As the metal magnetic powder, in addition to metal powder such as Fe powder and Co powder, it is also possible to use alloy powder such as Fe-Al, Fe-Al-Ni, Fe-Al-Zn, Fe-Al-Co, Fe-Al-Ca, Fe-Ni, Fe-Ni-Al, Fe-Ni-Co, Fe-Ni-Si-Al-Mn, Fe-Ni-Si-Al-Zn, Fe-Al-Si, Fe-Ni-Zn, Fe-Ni-Mn, Fe-Ni-Si, Fe-Mn-Zn, Fe-Co-Ni-P, Ni-Co, and other alloys containing as a main content Fe, Ni, Co or the like.

Among the aforementioned powders, the Fe magnetic powder has an excellent electric characteristic. As for the corrosion resistance and diespersibility, the Fe-Al alloy powders are preferable such as the Fe-Al, Fe-Al-Ca, Fe-Al-Ni, Fe-Al-Zn, Fe-Al-Co, Fe-Ni-Si-Al-Zn, and Fe-Ni-Si-Al-Mn alloy powders.

These metal magnetic powders preferably have an average longer axis length of 0.5 µm or below, and more preferably in a range of 0.01 to 0.4 µm, and further preferably from 0.01 to 0.3 µm; and an axis ratio(average longer axis length/average shorter axis length) of 12 or below, and more preferably 10 or below.

Thus, the ferromagnetic powder may be an oxide magnetic powder and metal magnetic powder. In any of the cases, the saturation magnetization (σs) is preferably equal to or above 70 emu/g. If the saturation magnetization is below 70 emu/g, it is impossible to obtain a sufficient electro-magnetic conversion characteristic. Moreover, in order to obtain a recording/reproduction in a high-density recording region, the specific surface by way of BET is preferably equal to or above 45 m²/g.

As the binder, like the aforementioned lower conductive layer 2 and the intermediate flat layer 3, it is possible to use polyurethane resin, polyester resin, vinyl chloride copolymer, and other vinyl chloride resin.

These resins preferably contain a repeated unit having at least one polar group selected from -SO₃M, OSO₃M, -COOM, -PO(OM')₂ (wherein M represents a hydrogen atom or an alkaline metal such as Na, K, Li; and M' represents a hydrogen atom or alkaline atoms such as Na, Li, or alkyl group) and sulfobetain group. These polar groups have a function to improve dispersibility of the ferromagnetic powder and are preferably contained in 0.1 to 8.0 ml %, and more preferably 0.2 to 6.0 mol %. If the content of a polar group is below 0.1 mol %, the diespersility of the magnetic powder is lowered. On the contrary, if the content exceeds 3.0 mol %, the upper magnetic layer paint is easily gelatinized. Moreover, the resin preferably has an average molecular weight in a range from 15,000 to 50,000.

It should be noted that the vinyl chloride copolymer having a polar group, for example, can be obtained by an addition reaction between a copolymer having a hydroxyl group such as vinyl chloride - vinyl alcohol copolymer and a compound having a poler group and a chlorine atom. Moreover, the polyester is synthesized by multi-basic acid. It should be noted that the polyester having other polar groups can also be synthesized by a known method. Polyurethane can be synthesized by a reaction between polyol and polyisocyanate. The polyol used for this reaction is usually polyester polyol obtained by a reaction between polyol and multi-basic acid. It should be noted that if polyester polyol having a polar group is used as a raw material, it is possible to synthesize polyurethane having a polar group.

Each of these resins may be used solely or in combination with others. For example, when using polyurethane and/or polyester mixed with vinyl chloride resin, the weight ratio is preferably in a range of 90 : 10 to 10 : 90, and more preferably 70 : 30 to 30 : 70.

Furthermore, the following resins may be used in an amount of 50 weight % or below with respect to the entire binder. As a resin to be used together, there can be exemplified vinyl chloride - vinyl acetate copolymer, vinyl chloride - vinylidene chloride copolymer, vinyl chloride - acryronitrile copolymer, butadiene - acryronitrile copolymer, polyamide resin, polyvinyl butylal, cellulose derivative (such as nitrocellulose), styrene - butadiene copolymer, phenol resin, epoxy resin urea resin, melamine resin, phenoxy resin, silicone resin, acrylic resin, urea formaldehyde resin, various synthetic rubber resin having an average molecular weight of 10,000 to 200,000.

The aforementioned binders are preferably mixed in an amount of 8 to 25 weight parts, and more preferably 10 to 20 weight parts with respect to 100 weight parts of ferromagnetic powder.

As the solvent, it is possible to use the aforementioned solvents exemplified in the description of the lower conductive layer 2. Moreover, when preparing a pint, kneading can be carried out as in the case of the lower conductive layer 2, and it is possible to use those kneading apparatuses exemplified in the description of the lower conductive layer 2. Furthermore, a dispersion agent can be used. The dispersion agent is preferably added in the amount of 0.5 to 5 weight % with respect to the ferromagnetic powder.

Moreover, in order to improve the running durability of the medium, the upper magnetic layer 4 may contain additives such as an abrasive and lubricant which are normally used in this type of magnetic recording medium.

As the abrasive, there can be exemplified α-alumina, molten alumina, chrome oxide, titanium oxide, α-iron oxide, silicon oxide, tungsten carbide, molybdenum carbide, boron carbide, corundum, zinc oxide, cerium oxide, magnesium oxide, boron nitride, and the like. The abrasive preferably has an average particle diameter in a range from 0.05 to 0.6 µm, and more preferably from 0.05 to 0.5 µm, and further preferably 0.05 to 0.3 µm. The abrasive is preferably added in the amount of (with respect to 100 weight parts of magnetic powder), 3 to 20 weight parts, and more preferably 5 to 15 weight parts, and further preferably 5 to 10 weight parts.

As the lubricant, it is possible to use any of the aforementioned materials exemplified in the description of the lower conductive layer 2. The type and the amount of the lubricants added to the upper, intermediate, and lower layers maybe different or identical.

On the other hand, when forming the aforementioned lower conductive layer 2, the intermediate flat layer 3, and the up@per magnetic layer 4, it is preferable to employ a so-called wet-on-wet technique in which double layers are applied while at least the intermediate flat layer 3 and the upper magnetic layer 4 are in a wet state. In this case, the lower conductive layer 2 is applied on the non-magnetic support body 1 beforehand.

When coating the non-magnetic support body with the lower conductive layer 2, it is possible to use a paint coating apparatus which is normally used in the paint-type magnetic recording medium. The paint coating apparatus may be an extrusion coater, reverse roll, gravure roll, air doctor coater, blade coater, air knife coater, squeeze coater, impregnation coater, transfer roll coater, kiss coater, cast coater, spray coater, and the like.

By using these paint coating apparatus, the lower conductive layer paint is applied onto the non-magnetic support body 1 traveling continuously and immediately dried to be solidified by a dryer provided in the like before wound up on a wind-up block. When producing a double-sided medium such as a magnetic disc, this processing carried out for both sides of the non-magnetic support body.

Moreover, the lower conductive layer 2 may be subjected to a calendar treatment if necessary. The surface flattening condition by a calendar apparatus, what is important is a temperature, linear pressure, feed speed. and the like. More specifically, it is preferable that the temperature be 50 to 140°C, the linear pressure be 50 to 1000 kg/cm², and the feed speed be 20 to 1000 m/minute. The calendar treatment improves the surface state as well as improve the conductivity of the lower conductive layer 2.

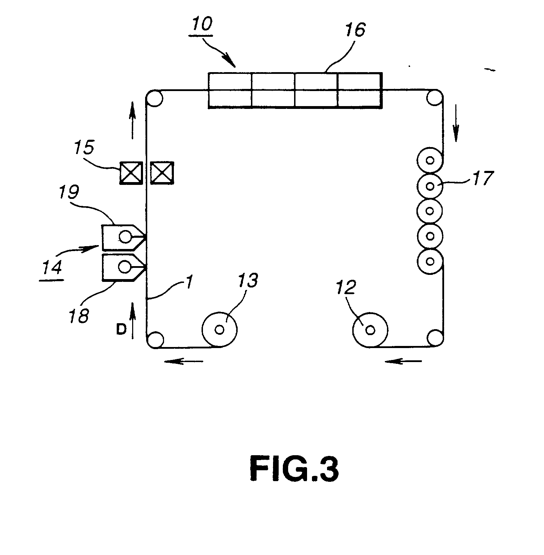

When forming on this lower conductive layer 2 the intermediate flat layer 3 and the upper magnetic layer 4 by way of wet-on-wet multi-coating, for example, a paint coating apparatus 10 as shown in Fig. 3 is used.

The paint coating apparatus 10 includes: a wind-up roll and a feed roll 13 between which a non-magnetic support body 1 having the lower conductive layer 2 travels; a coating device 14 for applying an intermediate flat layer paint and an upper magnetic layer paint onto the non-magnetic support body pulled out from the feed roll 13; an orientation magnet 15 for determining the magnetization direction of the upper magnetic layer; a dryer 16 for drying the points; and a calendar apparatus for the calendar treatment.

That is, in this paint coating apparatus 10, the non-magnetic support body 1 already having the lower conductive layer 2 is fed from the feed roll 13 to the wind-up roll 12, and along this feed direction, there are provided the coating device 14, the orientation magnet 15, the dryer 16, and the calendar apparatus 17 in this order.

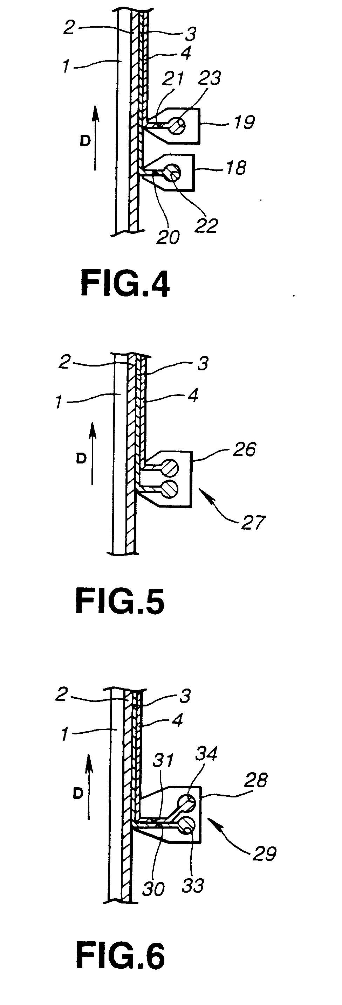

In this paint coating apparatus 10, firstly, the coating device 14 applies an intermediate flat layer paint and an upper magnetic layer paint onto the lower conductive layer already formed on the non-magnetic support body 1. As shown in Fig. 4, this coating device 14 includes a first extrusion coater 18 for applying the intermediate flat layer paint and a second extrusion coater 19 for applying the upper magnetic layer paint. Moreover, in this coating device 14, the second extrusion coater 19 is arranged at the fed out side and the first extrusion coater 18 is arranged at the introduction side of the non-magnetic support body.

The first extrusion coater 18 and the second extrusion coater 19 have slits 20 and 21, respectively, at their tips, and behind these slits, there are provided paint ports 22 and 23, respectively. In the first extrusion coater 18 and in the second extrusion coater 19, the paint ports 22 and 23 are supplied with the intermediate flat layer paint or the upper magnetic layer paint which are extruded through the slits 20 and 21 to the coater tips.

The non-magnetic support body 1 to be coated with the paints travels in the direction indicated by arrow D in Fig. 4 along the tip faces of the first extrusion coater 18 and the second extrusion coater 19.

When the non-magnetic support body 1 passes by the first extrusion coater 18, the intermediate flat layer paint extruded from the slit 20 is applied onto the lower conductive layer 2 so as to form an intermediate flat layer 3. After this, when the non-magnetic support body 1 passes by the second extrusion coater 19, the upper magnetic layer paint extruded from the slit 21 is applied on the intermediate flat layer 3 which is in a wet state, so as to form an upper magnetic layer 4. It should be noted that the first extrusion coater 18 and the second extrusion coater may be supplied with paints via an in-line mixer.

Thus, the non-magnetic support body 1 having the intermediate flat layer 3 and the upper magnetic layer 4 is fed successively through the orientation magnet 15, the dryer 16, and the calendar apparatus 17.

The orientation magnet 15 determines a magnetic field orientation of the upper magnetic layer. It should be noted that as the orientation magnet 15, it is possible to use a longitudinal orientation magnet or a vertical orientation magnet or, if a magnetic disc is to be produced, a random orientation magnet. These orientation magnets 15 are selected according to the type of the magnetic powder contained in the upper magnetic layer 4. In general, the orientation magnets preferably have a magnetic field in the order of 20 to 10,000 Gauss, but this does not apply to a case of the random orientation.

In the dryer 16, the intermediate flat layer 3 and the upper magnetic layer 4 are dried by a heated air from nozzles arranged at the top and bottom of the dryer 16. The drying conditions here are preferably as follows: temperature is 30 to 120°C, and the drying time is about 0.1 to 10 minutes.

The non-magnetic support body 1 which has passed through the dryer 16 is introduced into the calendar apparatus 17 where a surface flattening-smoothing treatment is carried out. In this surface flattening-smoothing treatment, the temperature, linear pressure, and feed speed are important factors. That is, as the surface flattening-smoothing treatment conditions, it is preferable that the temperature be 50 to 140°C, the linear pressure be 50 to 1000 kg/cm², and the feed speed is 20 to 1000 m/minute. Unless these conditions are satisfied, the surface state of the upper magnetic layer 4 may be deteriorated.

It should be noted that in this paint coating apparatus 10, the intermediate flat layer paint and the upper magnetic layer paint are applied from separate coaters, but the present invention is not to be limited to such a type. That is, as shown in Fig. 5, the first extrusion coater 18 and the second extrusion coater 19 may be formed as a unitary block serving as a coating device 27.

Moreover, in the aforementioned paint coating apparatus 10 the coating devices 14, 27 successively apply an intermediate flat layer paint and an upper magnetic layer paint, but the coating device may also be such a type that the intermediate flat layer paint and the upper magnetic layer paint are applied simultaneously. That is, as shown in Fig. 6, it is possible to use a coating device 29 including an extrusion coater 28 i which two slits are formed adjacent to each other so that the intermediate flat layer paint and the upper magnetic layer paint are applied simultaneously.

In this coating device 29, the extrusion coater 28 has at its end portion a first slit 30 and a second slit 31 formed adjacent to each other and behind these slits 30 and 31, there are provided a first paint port 33 and a second paint port 34, respectively.

In this coating device 29, the intermediate flat layer paint supplied to the first paint port 32 is applied horugh the first slit 30 onto the lower conductive layer 2, so as to form an intermediate flat layer 3. The upper magnetic layer paint supplied to the second paint port 33 is almost simultaneously applied through the slit 31 onto the intermediate flat layer 3 which is in a wet state, so as to form an upper magnetic layer 4.

In the aforementioned coating devices 14, 27, and 29, the extrusion coater may be replaced by a reverse roll, gravure roll, air doctor coater, blade coater, air knife coater, squeeze coater, impregnation coater, transfer roll coater, kiss coater, cast coater, spray coater, and the lie. Here, the coating method of the intermediate flat layer paint and the coating method of the upper magnetic layer paint may be identical or different. Accordingly, for example, it is possible to use a reverse roll in combination with an extrusion coater, or a gravure roll in combination with an extrusion coater for coating the upper magnetic layer paint and the intermediate flat layer paint.

Moreover, the aforementioned coating devices 14, 27, and 29 have a configuration for coating the lower conductive layer 2 already formed on the non-magnetic support body 1 with the intermediate flat layer 3 and the upper magnetic layer 4 by way of wet-on-wet multi-coating method. However, it is also possible to successively or simultaneously form the three layers including the lower conductive layer 2 by way of the wet-on-wet multi-coating method.

It should be noted that the magnetic recording medium having the lower conductive layer 2 on which the intermediate flat layer 3 and the upper magnetic layer 4 are formed may be subjected to a varnish treatment or blade treatment if necessary.

Moreover, the magnetic recording medium thus produced may be formed into a tape shape, film shape, sheet shape, card shape, disc shape, drum shape, or the like which are normally used.

As has been described above, the magnetic recording medium according to the present invention includes the lower conductive layer 2, the intermediate flat layer 3, and the upper magnetic layer 4. Accordingly, the upper magnetic layer 4 has a surface state which is affected by the intermediate flat layer 3. Because the intermediate flat layer 3 of this magnetic recording medium has no additive which may form a clod of conductive fine particles and has a preferable surface state. Consequently, in this magnetic recording medium, the upper magnetic layer 4 has a preferable surface state which is highly flat and smooth.

Moreover, this magnetic recording medium has the lower conductive layer 2 containing conductive fine particles. Accordingly, this magnetic recording medium has an excellent conductivity as a whole, preventing charging. Moreover, in ths magnetic recording medium, the conductive fine particles are contained in the lower conductive layer 2. Even if the conductive fine particles have formed clods, they will not affect the surface state of the upper magnetic layer 4. Consequently, in the magnetic recording medium, it is possible to prevent deterioration of the surface state due to the conductive fine particles.

Thus, the magnetic recording medium includes the upper magnetic layer 4 having a preferable surface state and accordingly, has an excellent electro-magnetic conversion characteristic as well as a preferable RF envelpe shape, while suppressing the drop-out. Moreover, because the lower conductive layer 3 has a sufficient conductivity, even when the multi-coating is carried out, the electric resistance of the entire tape is low, enabling to suppress drop-out and film damage due to adhesion of dust by charge as well as generation of a missing pulse by discharge.

Moreover, in this magnetic recording medium, in order to further improve the electro-magnetic conversion characteristic in a high density recording region, the upper magnetic layer preferably has a film thickness of 0.5 mm or below, and more preferably 0.1 to 0.3 mm. If the upper magnetic layer has a thickness exceeding 0.5 mm, the electric characteristic is deteriorated and insufficient to serve as a medium for the digital recording method, for example.

### Examples

Firstly, components of the upper magnetic layer paint were taken according to the composition given below and kneaded and dispersed by using a continuous two-shaft kneading apparatus and a sand mill so as to prepare an upper magnetic layer paint.

| <Upper magnetic layer paint composition> | |
|---|---|
| Ferromagnetic fine iron powder | 100 weight parts |
| (coercive force Hc: 2200 Oe; specific surface by BET method: 50 m²/g; longer axis length: 0.1 µm; needle shape ratio: 3; saturation magnetization σs: 145 emu/g) | |
| Binder: Vinyl chloride resin containing potassium sulfonate group | 20 weight parts |
| α-alumina | 5 weight parts |
| Myristic acid | 1 weight part |
| Butyl stearate | 1 weight part |
| Solvent | 350 weight parts |
| (mixture of methylethyl ketone, toluene, and cyclohxanon in weight ratio of 1 : 1 : 1) | |

In an experiment described below, this upper magnetic layer paint was used to produce a multi-coating paint-type magnetic recording medium and its characteristics were evaluated.

### Example 1

In Example 1, the components of the intermediate flat layer paint were taken according to the composition described below and kneaded and dispersed by using a continuous two-shaft kneading apparatus and a sand mill so as to prepare an intermediate flat layer paint.

| <Intermediate flat layer paint composition> | |
|---|---|
| α-Fe₂O₃ | 100 weight parts |
| (specific surface by BET method: 52.6 m²/g; longer axis length: 0.15 µm; needle shape ratio: 6.5) | |
| Binder: Vinyl chloride resin containing potassium sulfonate group | 20 weight parts |
| Myristic acid | 1 weight part |
| Butyl stearate | 1 weight part |
| Solvent | 350 weight parts |
| (mixture of methylethyl ketone, toluene, and cyclohxanon in weight ratio of 1 : 1 : 1) | |

Next, the components of the lower conductive layer paint were taken according to the composition described below and kneaded and dispered by using a continuous two-shaft kneading apparatus and a sand mill so as to prepare a lower conductive layer paint.

| <Lower conductive non-magnetic layer paint composition> | |
|---|---|
| Carbon black | 50 weight parts |
| (average particle diameter 17 nm; DBP oil absorption 75 ml/100 g) | |
| Nitrocellulose | 25 weight parts |
| Polyurethane resin | 25 weight parts |
| Solvent | 900 weight parts |
| (mixture of methylethyl ketone, toluene, and cyclohxanon in weight ratio of 1 : 1 : 1) | |

The lower conductive paint thus prepared was added by 5 weight parts of polyisocyanate compound. This was applied to both sides of a polyethylene terephthalate support body having a thickness of 70 µm, which was then dried and subjected to a calendar treatment for surface flattening-smoothing so as to form a lower conductive layer having a thickness of 0.5 µm. Next, each of the upper magnetic layer paint and the intermediate flat layer paint was added by 5 weight parts of polyisocyanate compound. After this, the upper magnetic layer paint and the intermediate flat layer paint were applied by way of the wet-on-wet coating method onto both sides of the polyethylene terephthalate support body already having the lower conductive layers. While the coating films were wet, magnetic field orientation was carried out, and then drying and calendar treatment for surface flattening and smoothing were carried out to obtain an intermediate layer having a thickness of 1.5 µm and an upper magnetic layer having a thickness of 0.15 µm on the lower conductive layers formed on both side of the polyethylene terephthalate support body.

The wide-tape-shaped magnetic recording medium thus obtained was punched into a disc shape having a diameter of 3.5 inches serving as a magnetic disc.

### Example 2

A magnetic disc was prepared in the same way as Example 1 except for that the carbon black used as the conductive fine particle for the lower conductive layer paint had an average particle diameter of 14 µm and DBP oil absorption of 95 ml/100 g.

### Example 3

A magnetic disc was prepared in the same way as Example 1 except for that the carbon black used as the conductive fine particle for the lower conductive layer paint had an average particle diameter of 35 µm and DBP oil absorption of 360 ml/100 g.

### Example 4

A magnetic disc was prepared in the same way as Example 1 except for that the non-magnetic powder used for the intermediate flat layer paint was needle-shaped α-Fe₂O₃ having a specific surface of 54.5 m²/g in the BET method, a longer axis length of 0.11 µm, and needle shape ratio of 6.1.

### Example 5

A magnetic disc was prepared in the same way as Example 1 except for that the non-magnetic powder used for the intermediate flat layer paint was needle-shaped α-Fe₂O₃ having a specific surface of 54.1 m²/g in the BET method, a longer axis length of 0.12 µm, and needle shape ratio of 5.0.

### Example 6

A magnetic disc was prepared in the same way as Example 1 except for that the non-magnetic powder used for the intermediate flat layer paint was TaO₂ having a specific surface of 113.6 m²/g in the BET method, a longer axis length of 0.13 µm, and needle shape ratio of 6.5.

### Example 7

A magnetic disc was prepared in the same way as Example 6 except for that the main pigment used for the intermediate flat layer paint was α-FeOOH having a specific surface of 93.0 m²/g in the BET method, and a longer axis length of 0.15 µm.

### Example 8

A magnetic disc was prepared in the same way as Example 1 except for that the non-magnetic powder used for the intermediate flat layer paint was needle-shaped α-Fe₂O₃ having a specific surface of 52.6 m²/g in the BET method, a longer axis length of 0.15 µm, and needle shape ratio of 6.5, to which was added 10 weight parts of α-Al₂O₃ having a specific surface of 6.5 m²/g in the BET method, and an average particle diameter of 0.4 µm.

### Example 9

A magnetic disc was prepared in the same way as Example 1 except for that the non-magnetic powder used for the intermediate flat layer paint was needle-shaped α-Fe₂O₃ having a specific surface of 52.6 m²/g in the BET method, a longer axis length of 0.15 µm, and needle shape ratio of 6.5, to which was added 2 weight parts of carbon black having a DBP oil absorption of 36 ml/100 g, and an average particle diameter of 0.4 µm.

### Example 10

A magnetic disc was prepared in the same way as Example 1 except for that the non-magnetic powder used for the intermediate flat layer paint was needle-shaped α-Fe₂O₃ having a specific surface of 46.1 m²/g in the BET method, a longer axis length of 0.23 µm, and needle shape ratio of 7.6.

### Example 11

A magnetic disc was prepared in the same way as Example 1 except for that the non-magnetic powder used for the intermediate flat layer paint was spheric α-Fe₂O₃ having a specific surface of 48.6 m²/g in the BET method, an average particle diameter of 0.03 µm.

### Example 12

A magnetic disc was prepared in the same way as in Example 1 except for that the intermediate non-magnetic layer paint had a composition as follows.

| <Intermediate non-magnetic layer paint> | |
|---|---|
| TiO₂ powder | 100 weight parts |
| (specific surface in BET method: 113,6 m²/g; longer axis diameter: 0.13 µm; needle shape ration: 6.5) | |
| Binder: vinyl chloride containing potassium sulfonate | 20 weight parts |
| Myristic acid | 1 weight part |
| Butyl stearate | 1 weight part |
| Solvent | 350 weight parts |
| (mixture containing methylethyl ketone, toluene, and cyclohexanon in weight ratio of 1 : 1 : 1) | |

### Example 13

A magnetic disc was prepared in the same way as in Example 12 except for that TiO₂ used as the main pigment used was replaced by α-FeOOH (having a specific surface in the BET method f 93.0 m²/g and longer axis diameter of 0.15 µm).

### Example 14

A magnetic disc was prepared in the same way as in Example 1 except for that the intermediate non-magnetic layer paint had a composition as follows.

| <Intermediate non-magnetic layer paint> | |
|---|---|
| α-Fe₂O₃ | 100 weight parts |
| (specific surface in BET method: 52.6 m²/g; longer axis diameter: 0.15 µm; needle shape ration: 6.5) | |
| α-Al₂O₃ | 10 weight parts |
| (specific surface in BET method: 6.5 m²/g; average particle diameter: 0.4 µm) | |
| Binder: vinyl chloride containing potassium sulfonate | 20 weight parts |
| Myristic acid | 1 weight part |
| Butyl stearate | 1 weight part |
| Solvent | 350 weight parts |
| (mixture containing methylethyl ketone, toluene, and cyclohexanon in weight ratio of 1 : 1 : 1) | |

### Example 15

A magnetic disc was prepared in the same way as in Example 1 except for that the intermediate non-magnetic layer paint had a composition as follows.

| <Intermediate non-magnetic layer paint> | |
|---|---|
| α-Fe₂O₃ | 100 weight parts |
| (specific surface in BET method: 52.6 m²/g; longer axis diameter: 0.15 µm; needle shape ration: 6.5) | |
| carbon black | 2 weight parts |
| (DBP oil absorption: 36 ml/100 g; average particle diameter: 0.3 µm) | |
| Binder: vinyl chloride containing potassium sulfonate | 20 weight parts |
| Myristic acid | 1 weight part |
| Butyl stearate | 1 weight part |
| Solvent | 350 weight parts |
| (mixture containing methylethyl ketone, toluene, and cyclohexanon in weight ratio of 1 : 1 : 1) | |

### Comparative Example 1

A magnetic disc was prepared in the same way as Example 1 except for that 5 weight parts of polyisocyanate compound was added to each of the intermediate flat layer paint and the upper magnetic layer paint prepared in the same way as Example 1, and these paints were applied by way of multi-coating to both sides of a polyethylene terephthalate support body having a thickness of 70 µm, which was subjected to magnetic field orientation while wet, and after being dried, was subjected to a calendar treatment for surface flattening-smoothing so as to form an intermediate flat layer having a thickness of 1.5 µm and an upper magnetic layer having a thickness of 0.15 mm on both sides of the polyethylene terephthalate support body.

That is, in this Comparative Example 1, a magnetic disc having no lower conductive layer was prepared.

### Comparative Example 2

A magnetic disc was prepared in the same way as Example 1 except for that the intermediate flat layer paint was appled to form an intermediate flat layer on both side of the polyethylene terephthalate support body and on these intermediate flat layers were coated by the lower conductive layer paint nd the upper magnetic layer paint by way of multi-coating.

That is, in this Comparative Example 2, a magnetic disc was prepared in which the intermediate flat layer and the lower conductive layer changed their positions each other.

### Comparative Example 3

Components of the lower conductive layer paint were taken according to the composition described below and kneaded and dispered by using a continuous two-shaft kneading apparatus and a sand mill so as to prepare a lower conductive layer paint.

| <Lower conductive layer paint composition> | |
|---|---|
| α-Fe₂O₃ | 100 weight parts |
| (specific surface in the BET method: 52.6 m²/g; longer axis length: 0.15 µm; needle shape ratio: 6.5) | |
| Graphite | 10 weight parts |
| (average particle diameter 35 nm; DBP oil absorption 360 ml/100 g) | |
| Binder: vinyl chloride containing potassium sulfonate | 20 weight parts |
| Myristic acid | 1 weight part |
| Butyl stearate | 1 weight part |
| Solvent | 400 weight parts |
| (mixture of methylethyl ketone, toluene, and cyclohxanon in weight ratio of 1 : 1 : 1) | |

Each of the lower conductive paint thus prepared and the upper magnetic layer paint prepared as in Example 1 was added by 5 weight parts of polyisocyanate compound. This upper layer magnetic paint and the lower conductive non-magnetic pa int were applied by wet-on-wet multi-coating method to both sides of a polyethylene terephthalate support body having a thickness of 70 µm, which was subjected to a magnetic field orientation treatment, and then dried and subjected to a calendar treatment for surface flattening-smoothing so as to form a lower conductive layer having a thickness of 1.5 µm and an upper magnetic layer having a thickness of 0.15 µm on both sides of the polyethylene terephthalate support body. The wide-tape-shaped magnetic recording medium thus obtained was punched into a disc shape having a diameter of 3.5 inches serving as a magnetic disc. That is, in Comparative Example 3, a magnetic disc was prepared having a lower conductive layer containing conductive fine particles of graphite and needle-shaped α-Fe₂O₃ and an upper magnetic layer.

### Characteristics Evaluation Tests

The magnetic discs prepared in Examples 1 to 15 and Comparative Examples 1 to 3 were checked in surface flatness, surface roughness Ra, electro-magnetic conversion characteristic, RF envelope, the number of drop-outs, and surface electric resistance. These checks were made as follows.

### (1) Surface flatness

Each of the tape surfaces was observed by using a differential interference type microscope. The surface which was evaluated as considerably flat is marked by a circle (O), the surface evaluated as slightly rough is marked by a triangle (Δ), and the surface evaluated as considerably rough is marked by a cross (×).

### (2) Surface roughness Ra (nm)

The center line average roughness Ra specified by JIS B 0601 was measured to define the surface roughness Ra by using a Tarry step roughness-meter produced by Taylor Hobson. The measuring conditions were as follows: stylus 2.5 × 0.1 µm; needle pressure 2 mg; cut-off filter 0.3 Hz; measurement speed 2.5 µm/s; and reference length 0.5 mm. It should be noted that in the roughness curve, a protrusion and indentation equal to or above 0.01 µm were cut.

### (3) Electro-magnetic conversion characteristic (RF output)

A floppy disc drive (trade name MPF-42B produced by Sony Co., Ltd.) was revised into a disc rotation speed of 3600 rpm, and a thin-film type head of 0.2 µm was used so as to run on the outermost circumference of a sample disc. An output component of 35 MHz generated in the magnetic head was measured for evaluation. The measurement data was recorded as a relative value, assuming 0 dB a value obtained by the magneic disc of Example 1.

### (4) RF envelope

Each of the magnetic discs was rotated on the floppy disc drive used in the electro-magnetic conversion characteristic test and the resultant RF envelope on a oscilloscope was used to determine a maximum value and a minimum valiue to obtain a ratio between them.

### (5) Number of drop-outs

For each of the magnetic discs, the number of drop-outs, i.e., -12 dB/5 µs output lowering detected per minute was counted.

### (6) Surface electric resistance

A pair of electrodes were arranged to both ends of each magnetic disc and a voltage was applied between these electrodes so as to measure a current passing the magnetic disc and converts the measured value into an electric resistance.

Table 1 shows results of the aforementioned measurements.

**[Table 1]**

| | (1) | (2) [nm] | (3) [dB] | (4) [%] | (5) [pcs/min] | (6) [Ω] |
|---|---|---|---|---|---|---|
| Example 1 | ○ | 2.8 | 0.0 | 88 | 3 | 4 × 10⁶ |
| Example 2 | ○ | 2.4 | 0.2 | 86 | 3 | 9 × 10⁶ |
| Example 3 | ○ | 2.9 | -0.1 | 87 | 4 | 8 × 10⁴ |
| Example 4 | ○ | 2.9 | 0.4 | 89 | 3 | 5 × 10⁶ |
| Example 5 | ○ | 2.5 | 0.3 | 88 | 2 | 4 × 10⁶ |
| Example 6 | ○ | 2.8 | -0.1 | 88 | 3 | 3 × 10⁶ |
| Example 7 | ○ | 3.0 | -0.2 | 86 | 3 | 2 × 10⁶ |
| Example 8 | ○ | 3.9 | -0.6 | 87 | 4 | 5 × 10⁶ |
| Example 9 | ○ | 4.1 | -0.8 | 89 | 3 | 5 × 10⁶ |
| Example 10 | Δ | 4.6 | -1.3 | 80 | 9 | 4 × 10⁶ |
| Example 11 | Δ | 5.4 | -2.1 | 74 | 12 | 5 × 10⁶ |
| Example 12 | ○ | 2.8 | -0.1 | 88 | 3 | 3 × 10⁶ |
| Example 13 | ○ | 3.0 | -0.2 | 86 | 3 | 2 × 10⁶ |
| Example 14 | ○ | 3.9 | -0.6 | 87 | 4 | 5 × 10⁶ |
| Example 15 | ○ | 4.1 | -0.8 | 89 | 3 | 5 X 10⁶ |
| Comp. Ex.1 | ○ | 2.4 | 0.4 | 86 | 35 | >10¹² |
| Comp. Ex.2 | × | 8.8 | -2.9 | 76 | 19 | 6 × 10⁶ |
| Comp. Ex.3 | × | 7.5 | -2.7 | 78 | 10 | 4 × 10⁶ |

As shown in able 1, each of the magnetic discs of Examples 1 to 15 having two non-magnetic layers, i.e., a lower conductive layer containing carbon black or graphite and an intermediate flat layer containing a non-magnetic powder such as needle-shaped α-Fe₂O₃ exhibited a preferable surface state as well as preferable electro-magnetic conversion characteristic and RV envelope, while sufficiently suppressing the drop-out and reducing the electric resistance.

On the contrary, the magnetic disc of Comparative Example 1 not having a conductive layer containing carbon black or graphite and having only one non-magnetic layer containing a needle-shaped α-Fe₂O₃ of longer axis length equal to or below 0.2 µm had no problem in the surface state, electro-magnetic conversion characteristic and RF envelope but exhibited a considerably high electric resistance, which resulted in charging of the magnetic disc, which in turn caused adhesion of dust, increasing the number of drop-outs. Moreover, discharge frequently caused a missing pulse.

Consequently, in a magnetic recording medium, in order to suppress the electric resistance, it is necessary to provide a lower conductive layer. Moreover, the lower conductive layer here needs to reduce the electric resistance of the magnetic recording medium and it is possible to use conductive fine particles other than carbon black and graphite.

Moreover, the optical disc of Comparative Example 2 having a layer containing a needle-shaped α-Fe₂O₃ of longer axis length equal to or below 0.2 µm formed on non-magnetic support body and an upper layer containing carbon black formed thereon had a conductive layer and exhibited sufficiently low electric resistance of the magnetic disc but this conductive layer had a deteriorated surface state, which in turn deteriorated the surface state of the upper magnetic layer formed on this upper layer, which adversely affected the electro-magnetic conversion characteristic and RF envelope as well as the drop-out. Accordingly, in a magnetic recording medium it is necessary to further provide an flat layer between the lower conductive layer and the upper magnetic layer.

Moreover, the magnetic disc of Comparative Example 3 having a non-magnetic layer containing needle-shaped α-Fe₂O₃ of longer axis length equal to or below 0.2 µm and graphite and an upper magnetic layer formed on this non-magnetic layer, because of graphite contained in the non-magnetic layer, exhibited a low electric resistance. However, the surface state of the non-magnetic layer was insufficient and accordingly, the magnetic layer had a surface state deteriorated, which adversely affected the electro-magnetic conversion characteristic and RF envelope as well as the drop-out. Consequently, in the present invention, it is necessary to clearly separate the layer contributing to conductivity of the magnetic recording medium from a layer contributing to flatness and smoothness of the uppermost layer, and to provide two non-magnetic layers of the lower conductive layer and the intermediate flat layer.

Furthermore, if the Examples 1 to 9 are compared to Example 10 and to Example 11, it can be understood that the α-Fe₂O₃ contained in the intermediate flat layer is preferably needle-shaped having a longer axis length equal to or above 0.2 µm. In the magnetic disc of Examples 10 and 11, the intermediate flat layer may not be sufficiently flat and smooth, which in turn may deteriorate the surface state of the uppermost layer. Accordingly, in the present invention, the α-Fe₂O₃ contained in the intermediate flat layer is preferably needle-shaped particles having a longer axis length equal to r below 0.2 µm.

As is clear from the aforementioned, in the recording medium according to the present invention, the lower conductive layer contains conductive fine particles and the intermediate flat layer contains a non-magnetic powder. Accordingly, it is possible to obtain an excellent surface state and an excellent conductivity as a whole. Consequently, this magnetic recording medium has a preferable electro-magnetic conversion characteristic and reliability in a high-density recording region.

## Claims

1. A magnetic recording medium comprising:
a lower conductive layer containing conductive fine particles and a binder and formed on a non-magnetic support body;
an intermediate flat layer containing a non-magnetic powder and a binder and formed on said lower conductive layer; and
an upper magnetic layer containing a ferromagnetic powder and a binder and formed on said intermediate flat layer.

2. A magnetic recording medium as claimed in Claim 1, wherein said lower conductive layer and said intermediate flat layer are non-magnetic.

3. A magnetic recording medium as claimed in Claim 1 or 2, wherein said lower conductive layer contains carbon black and/or graphite as the conductive fine particles.

4. A magnetic recording medium as claimed in Claim 1, 2 or 3, wherein said intermediate flat layer contains needle-shaped α-Fe₂O₃ as the non-magnetic powder.

5. A magnetic recording medium as claimed in any preceeding claim,
wherein said needle-shaped α-Fe₂O₃ has a longer axis length equal to or below 0.2 µm.

6. A magnetic recording medium as claimed in any preceding claim,
wherein said upper magnetic layer has a thickness equal to or below 0.5 µm.

7. A magnetic recording medium as claimed in any preceding claim,
wherein said intermediate flat layer and said upper magnetic layer are applied by way of multi-coating while they are in a wet state.
